# EUROPEAN PATENT SPECIFICATION

(11) **EP 1 165 411 B1**
(45) Date of publication and mention of the grant of the patent: **18.06.2003**
(21) Application number: 00914369.4
(22) Date of filing: 21.03.2000
(51) Int. Cl.: B65G 37/02, A47J 37/04, A47J 37/12

(54) **PRODUCTION FACILITY FOR THE PRODUCTION OF FOODSTUFFS**
PRODUKTIONSEINHEIT ZUM BEREITEN VON NAHRUNGSMITTELN
INSTALLATIONS DE PRODUCTION DE DENREES ALIMENTAIRES

(30) Priority: 22.03.1999 NL 1011632
(43) Date of publication of application: 02.01.2002
(73) Proprietor: STORK TITAN B.V., 5831 AV Boxmeer (NL)
(72) Inventor: BISSELING, Gerhardus, Theodorus, Andreas, NL-5364 PS Escharen (NL); VAN DER EERDEN, Henricus Franciscus Jacobus Maria, 5421 MC Gemert (NL)
(74) Representative: Brookhuis, Hendrik Jan Arnold
(86) International application number: NL0000190
(87) International publication number: WO00056641

(56) References cited:
- FR-A- 2 661 325
- GB-A- 2 294 380
- NL-A- 7 203 567
- US-A- 4 179 985
- US-A- 4 297 942
- US-A- 4 975 039
- US-A- 5 085 137
- US-A- 5 125 328
- US-A- 5 937 744

## Description

The present invention relates to a production facility for the production of foodstuffs, and in particular to a production facility in which a deep-frying device and one or more thermal treatment devices are incorporated for deep-frying and thermally treating the foodstuffs.

A production facility of this nature is known, for example, for the production of meat products, in which case the production facility comprises a series of production machines which are arranged one behind the other, are fixed to the floor and include in this series a deep-frying device and, downstream of the latter, a thermal treatment device which is designed as a heating device. In this case, both the deep-frying device and the heating device, which is designed, for example, as a tunnel oven, are provided with a conveyor which is designed to convey the foodstuffs in a fixed conveying direction from an entry side to an exit side of the device in question.

Upstream of the deep-frying device, a number of production machines are located in a fixed arrangement on the floor, namely a moulding machine for moulding a three-dimensional meat product, for example a hamburger, from a mass of pounded meat, a machine for applying a coating of liquid batter and/or marinade to the moulded meat products, and a machine for applying an outer coating consisting of a material in powder or crumb form. The moulded meat products which have been provided with a coating are then deep-fried in the deep-frying device, after which they are past through the heating device in order to cook the meat products. Then, the meat products are supplied to a cooling device, in order for the meat products to be cooled and/or frozen, after which the products pass into a suitable storage area.

This known fixed arrangement of the production machines has a number of drawbacks which relate, on the one hand, to food technology and, on the other hand, to operational aspects.

With regard to the technological side, a drawback in certain cases is that the foodstuffs have already been provided with a coating or the like before they are deep-fried. This coating often stops heat from penetrating from the deep-frying bath into the interior of the (meat) product; the coating in this case acts as an insulation. This may require undesirably long frying times for the product, possibly resulting in the coating burning or losing quality, or to the interior of the product being heated insufficiently. A further drawback which may arise is that the coating partially comes off the foodstuff and is left in the deep-frying bath. This leads to contamination of the deep-frying bath. A further drawback of the known production facility described above is that there is very considerable contamination to production machines arranged downstream of the deep-frying device when foodstuffs which have already been passed through the deep-frying bath are being processed and conveyed.

The latter drawback is avoided in another known production facility in which a fixedly arranged deep-frying device and one or more fixedly arranged thermal treatment devices are likewise incorporated, but in which the deep-frying device is arranged downstream of the thermal treatment devices, more or less at the end of the production line. However, reversing the order of deep-frying and thermal treatment, in particular cooking, of the foodstuffs is by no means permissible/possible for all the foodstuffs, and consequently this production facility can only process a limited number of foodstuffs.

With regard to the operational aspects, the known production facilities described above cannot satisfy the requirements of today's market in an economically attractive manner. These market requirements are characterized in particular by the need for relatively small batches of highly diverse foodstuffs, in contrast to large batches of only a few foodstuffs. The market also demands foodstuffs with an increasingly low preservative content, which causes the shelf life to decrease and requires more frequent production of small batches. The diversity of the foodstuffs required also means that by no means all of these foodstuffs have to be subjected to all the treatment steps for which the known production facilities are designed. With regard to the above-described production of meat products, it is conceivable that some meat products may only have to be fried or only cooked. Furthermore, there are meat products which only have to be provided with a coating, for example meat products which are sold in fresh-packed form and are cooked by the consumer himself. The abovementioned known production facilities do not offer the required flexibility enabling a different type of foodstuff to be produced sometimes several times each working day. In these facilities, in particular the time which is required to change over the production line is undesirably long, representing a drawback for the production capacity of the production facility. Also, the work required on the part of the production staff is undesirably substantial.

Another issue is the need for the important data from the production of the foodstuffs using the production facility to be recorded, in particular in order for a report associated with each batch of foodstuffs to be drawn up. Current production facilities do not provide an advantageous means of recording this data.

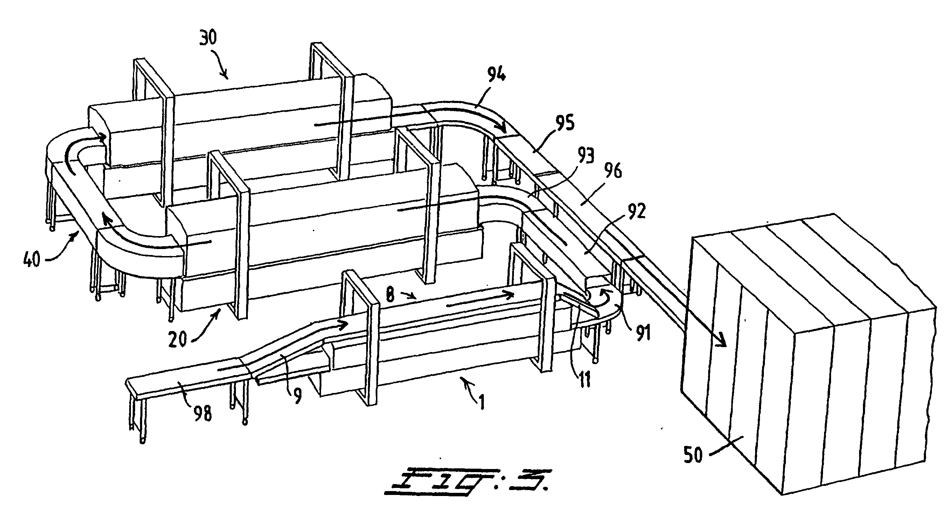

FR-A-2 661 325 discloses a facility according to the preamble of claim 1 with one fixedly arranged thermal treatment device (see fig. 4) for subjecting the foodstuffs to a thermal treatment which device has an entry sided and an exit side for the foodstuffs which are to be treated, and an associated conveyor for conveying the foodstuffs in a fixed conveying direction from the entry side to the exit side.

The object of the present invention is to propose measures which lead to an improved production facility for the production of foodstuffs, which improvements reside, on the one hand, in the field of foodstuffs technology and, on the other hand, in the field of the operational aspects of such a facility.

According to a first aspect, the present invention provides a production facility according to claim 1. Through using production machines on wheels in addition to the fixedly arranged deep-frying device and thermal treatment device(s), it is possible, when changing over from production of one type of foodstuffs to another type of foodstuff, for the said wheeled production machines to be displaced easily to that location in the production line which is optimum for the production of the foodstuff in question. If desired, it is also possible to remove one or more wheeled production machines from the production line if these production machines are temporarily not required. Another advantage of the use of production machines on wheels is that in particular in the case of machines which rapidly become contaminated, one machine can be removed from the production line and replaced by an identical machine, so that the production line remains in operation while the other machine can be cleaned and/or undergo maintenance.

The present invention provides in particular a production facility with a deep-frying device and two thermal treatment devices, which are arranged fixedly next to one another on a production floor. In combination with a plurality of production machines on wheels and with conveyors on wheels, it is possible to assemble a large number of different production lines in order to carry out production processes which commonly arise in practice.

Preferably, a central main control device is provided, which is designed to control a plurality of (preferably all) production machines. Preferably, the central control unit has a memory for storing relevant data relating to the production process carried out, which data can subsequently be used for a report belonging to the foodstuffs produced using the production process in question. Preferably, positioning means are provided.

By means of this measure, it is possible for the production staff to rapidly fix the wheeled production machines in a correct alignment with respect to one another and, if appropriate, with respect to fixedly arranged production machines.

Preferably, the second positioning means are embedded in the floor, in such a manner that the production machines on wheels can be moved over the second positioning means, transversely with respect to the longitudinal direction of the production line. In this way, it is possible for a production machine to be removed from and added to the production line sideways. This is advantageous, for example, if two identical production machines on wheels are available and if it is desired for a machine which is incorporated in the production line to be replaced by a cleaned machine without, in the process, having to displace other production machines in the line.

In a preferred embodiment, the second positioning means are formed by an elongate channel which is embedded in the floor and extends in the longitudinal direction of the production line in question, in which case the production machines on wheels are provided with first positioning means which can be moved up and down and can be fitted into the channel. In this case, it is preferable for the channel to be connected to a sewage system, so that when the floor is being cleaned water which enters the channel can be discharged via the sewage system. If the machines on wheels are provided with castors, it is preferable for the channel to be narrower than these wheels, so that a wheel cannot become jammed in the channel.

The various aspects of the invention will be explained in more detail below with reference to the drawing, in which:
Fig. 1 shows a production facility according to the invention in an arrangement with a first production line,
Fig. 2 shows the production facility from Fig. 1 with an arrangement in a second production facility,
Fig. 3 shows the production facility from Fig. 1 with an arrangement in a third production line,
Fig. 4 shows the production facility from Fig. 1 with an arrangement in a fourth production line,
Fig. 5 shows a perspective view of part of the production facility from Fig. 1,
Fig. 6 shows a detail of the production facility from Fig. 5,
Fig. 7 shows a detail of the production facility from Fig. 5,
Fig. 8 shows a side view of a production machine on wheels according to the invention,
Fig. 9 shows a plan view of a detail of the production machine from Figure 8.

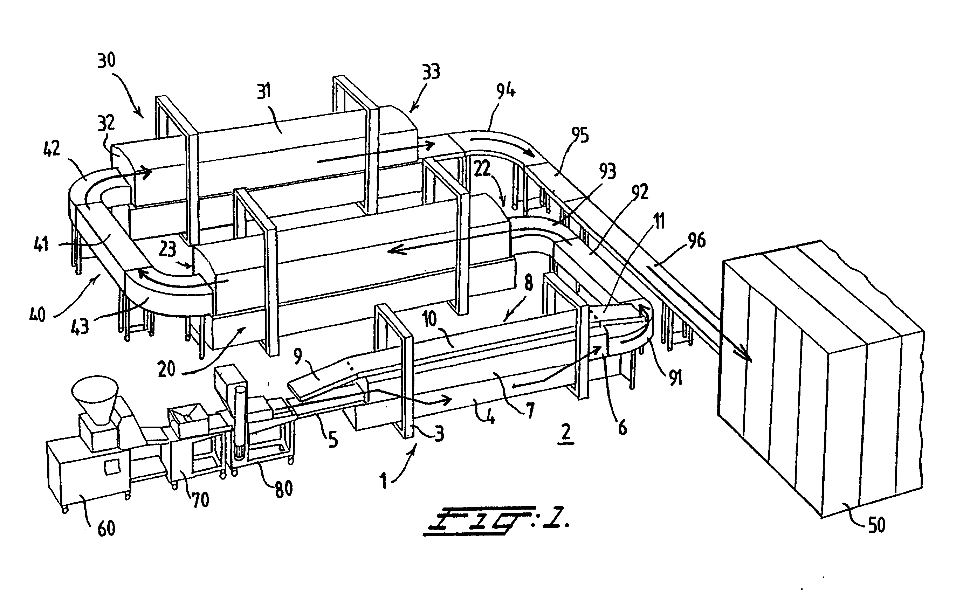

Figures 1, 2, 3 and 4 show a perspective view of a production facility for the production of foodstuffs, each figure showing a different production line which is formed using the production facility.

A deep-frying device 1 having a frame 3 which is fixed to a floor 2 and an elongate deep-frying bath 4, which is supported by the frame and may be filled with deep-frying oil which can be heated by heater means (not shown), can be seen in Figures 1-4.

The deep-frying device 1 has an associated deep-frying bath conveyor for guiding the foodstuffs which are to be deep-fried in a fixed conveying direction from an entry side 5 to an exit side 6 through the deep-frying bath 4. Furthermore, there is a hood 7 which extends above the deep-frying bath 4, to which hood a vent line for deep-frying vapours may be connected.

The deep-frying device 1 is also provided with a bypass conveyor 8 for conveying foodstuffs which do not have to be deep-fried past the deep-frying bath 4. In this case, the bypass conveyor 8 extends over the top of the deep-frying bath 4 and has a run-up section 9, a middle section 10, and a run-down section 11. In this case, the run-up section 9 and the run-down section 11 are movably connected to the middle section 10. The run-up section 9 may be moved into the path of the foodstuffs supplied to the deep-frying device 1 in the vicinity of its entry side, in which case it guides the foodstuffs upwards towards the middle section 10.

The production facility furthermore comprises two substantially identical heating devices 20 and 30, of which only the device 30 will be explained in more detail below. In the context of the claims and the introduction, these heating devices are also referred by the term thermal treatment devices.

The heating devices 20 and 30 are arranged in a fixed position on the floor 2 of the production facility, at a distance from but next to and parallel to one another and the deep-frying device 1, which likewise cannot be displaced.

The heating device 30 comprises a housing 31, which is of straight and elongate design. The housing 31 forms a type of tunnel, which design is referred to by the term "tunnel oven". The housing 31 delimits a chamber which is shielded from the outside atmosphere and has an opening on entry side 32, through which the foodstuffs enter the shielded chamber, and an opening on exit side 33, through which the foodstuffs leave the housing 31.

The heating devices 20 and 30 are provided with heater means (not shown) for heating the foodstuffs in the shielded chamber. By way of example, the heater means are designed to heat the foodstuffs using heated air. In an alternative variant, the foodstuffs are heated by microwave radiation, and of course it is also possible to implement combinations of various types of heating in each of the devices 20 and 30.

The device 30 comprises a conveyor (not shown) for conveying the foodstuffs from an entry side 32 to the exit side 33, at the opposite end of the housing, through the shielded chamber. The device 20 also comprises a conveyor of this nature which is designed to convey the foodstuffs from entry side 22 to exit side 23.

It can be seen from Figures 1-4 that the heating devices 20 and 30 are arranged with their conveying directions running oppositely, so that the entry side 22 is situated next to the exit side 23 and the exit side 23 is situated next to the entry side 32.

The production facility furthermore comprises a displaceable conveyor 40 belonging to the heating devices 20 and 30. This conveyor 40 is designed in such a manner that, depending on the positioning of the conveyor 40, the foodstuffs can be conveyed from the exit side 23 to the entry side 32 (as shown in Fig. 1) or from the exit side 33 to the entry side 22 (as in Fig. 2). In view of the fixed arrangement of the devices 20 and 30 next to and parallel to one another with opposite fixed conveying directions, the conveyor 40 is designed to divert the flow of foodstuffs coming out of one heating device through 180° and then supply it to the other heating device. For this purpose, the conveyor is designed with a conveyor path which extends through 180°, and in this example is substantially U-shaped.

The conveyor 40 is in this case designed so that it can be moved on wheels arranged on the bottom of the frame. The conveyor 40 on wheels is substantially U-shaped and in this example has a substantially straight middle section 41 and two bend sections 42, 43. The bend sections 42, 43 are designed to connect one end of the middle section 41 to a thermal treatment device. The middle section 41 and the bend sections 42, 43 are provided with releasable coupling means for connecting these sections 41, 42, 43 to one another.

It can be seen from Figures 1-4 that the sections of the conveyor 40 are provided with a hood, so that the conveyor 40 forms a shielded chamber through which the foodstuffs are conveyed.

Figures 1-4 also show a cooling device 50, in which the foodstuffs produced can be cooled and, if appropriate, frozen before they are removed and/or stored.

In the case of the production line shown in Figure 1, a number of production machines on wheels are also arranged upstream of the deep-frying device 1. These machines include a moulding device 60 for moulding three-dimensional foodstuffs from a mass. In particular, the moulding device 60 is designed to produce foodstuffs from a mass of pounded meat, for example hamburgers. Downstream of the moulding device 60 there is an additive-adding device 70 on wheels for adding an additive to the foodstuffs. In particular, the device 70 is designed to coat the outside of the foodstuffs with a layer of a liquid material, for example a batter. Downstream of the device 70 there is a crumbing device 80, which can be used to apply a layer of coating material in crumb form to the outside of the foodstuffs.

The coated and crumbed meat products then enter the deep-frying bath 4, in which they are deep-fried. Then, a number of conveyors 91, 92, 93 which are on wheels and in this case are provided with a hood convey the deep-fried foodstuffs to the entry side of the heating device 20. In this device 20, a first part of the cooking of the deep-fried products takes place, after which the meat products are cooked further in the device 30. The meat products are then removed to the cooling device 50 via conveyors 95, 96, 97.

In the production line shown in Figure 2, the moulding device 60, together with a production machine 100 positioned downstream thereof, is arranged in line with the entry side 32 of the heating device 30. The production machine 100 is designed to add flour to the moulded meat products in order, in this way, to bind the moisture in the meat products.

The conveyor 40 in this case connects the exit side 33 of the device 30 to the entry side 22 of the device 20. Compared with the arrangement shown in Figure 1, this in fact reverses the conveying direction of the foodstuffs through the assembly (comprising the devices 20 and 30 and the conveyor 40) which heats the foodstuffs.

The exit side of the said device 20 is connected, via intermediate conveyors 91, 92, 93, 95, 97 which are on wheels, to the entry side of the device 70, in which a layer of batter or the like is applied to the foodstuffs. Then, wheeled device 80 applies a layer of material in crumb or powder form to the outside of the foodstuffs. A device 110 arranged downstream of this applies a layer of a thick batter to the foodstuffs.

The devices 70, 80, 110 are arranged in a set-up line ahead of the entry side to the deep-frying device 1, and the foodstuffs which have been processed by these devices then pass through the deep-frying bath 4 and are fried. Then, the foodstuffs are removed to the cooling device 50 via conveyor 98.

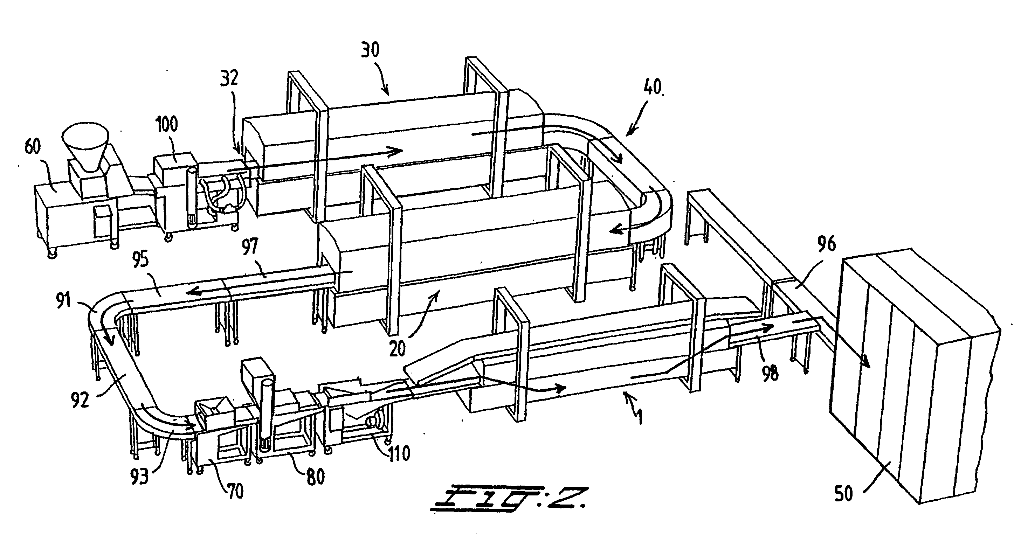

In the production line shown in Figure 3, the above-described production machines on wheels are not used. The foodstuffs are supplied via a conveyor 98 to the run-up section 9, which has been pivoted down, of the bypass conveyor 8 and are then conveyed over the deep-frying device 1 and, via the pivoted-down run-down section 11, move onto the bend conveyor 91. The foodstuffs are thus not deep-fried. Then, the foodstuffs pass via the hooded conveyors 92 and 93 into the heating device 20, in which a first section of a heat treatment is carried out. Via conveyor 40, the foodstuffs then enter the second heating device 30, in which a second section of a heat treatment is carried out. Via the conveyors 94, 95, 96, the treated foodstuffs reach the cooling device 50.

In the production line shown in Figure 4, the heating devices 20 and 30 are not used for the production process. The production line in this case comprises the moulding device 60, as well as the above-described devices 70 and 80, which are arranged in line upstream of the entry side of the deep-frying device 1. In one embodiment, the foodstuffs which emerge from the device 80 are not deep-fried and move past the deep-frying bath 4 via the bypass conveyor 8. As indicated by dashed arrows, in another variant the foodstuffs are passed through the deep-frying bath 4 and are then discharged directly to the cooling device 50.

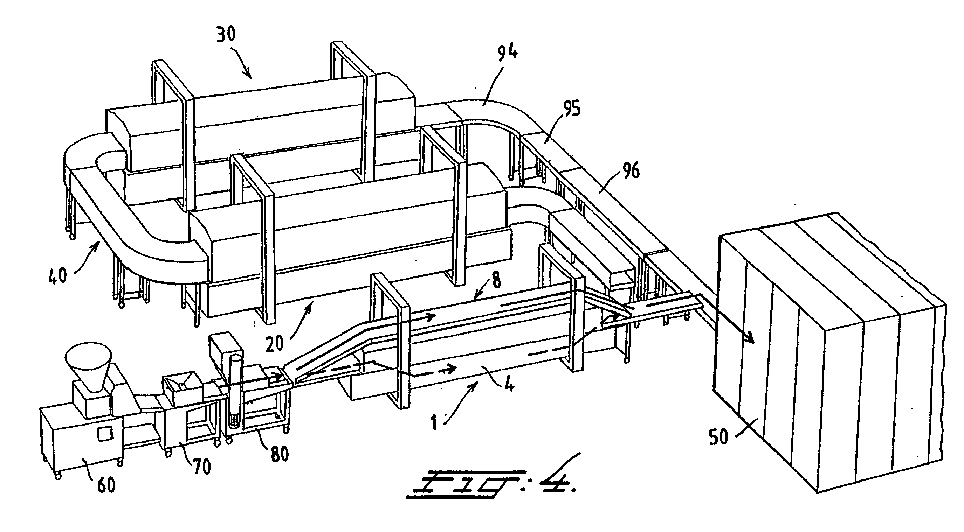

In Figure 5, it can be seen clearly that the devices 60, 70 and 80 are provided with wheels, in this example castors, by means of which the devices can be moved over the floor 2 of the production facility. In Figure 5, these castors of device 70 are denoted by reference numeral 71.

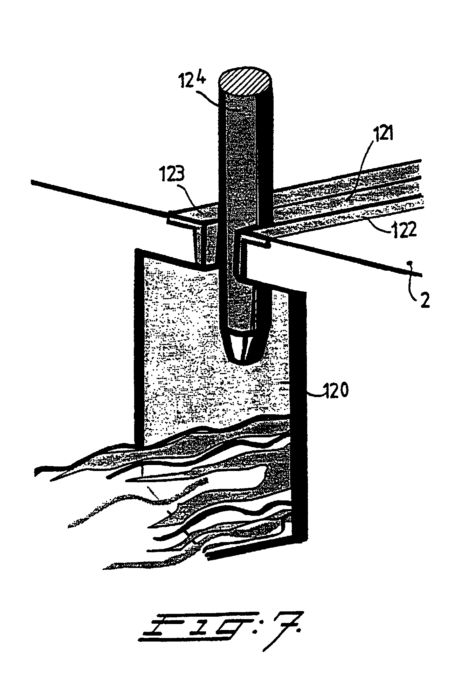

The wheeled devices 60, 70, 80, as well as the wheeled devices 100, 110 described above, are each provided with actuable first positioning means, which can be brought into engagement with fixed second positioning means, which are arranged in particular on the floor, for holding the wheeled devices in a desired position. This will be explained in more detail with reference to Figures 5, 6 and 7.

An elongate channel 120 is arranged in the floor 2, for example in line with the entry side of the deep-frying device 1. Level with the floor 2, this channel 120 has a narrow access gap 121, which in this case is delimited by two metal rails 122 and 123 which are anchored at a distance from one another in the floor 2. The channel 120 is connected to a sewage system (not shown in further detail), so that water which enters the channel 120 during cleaning can be drained away.

The device 70 is provided, at two axially separate locations, with a positioning pin 124 which can move up and down between an upper position, in which the pin 124 is free from the floor 2 and a lowered position in which the pin 124 fits into the channel 120 between the rails 122, 123. In this position, the pin 124 fits between the said rails 122, 123 with a slight lateral play. The pin 124 is easy to move up and down manually. By lowering the two pins 124 of each wheeled production device into the channel 120, it is possible to easily ensure that the device in question is aligned with respect to production devices arranged upstream and/or downstream.

Preferably, the floor 2 of the production facility is provided, at a plurality of suitable locations, with channels 120 into which the pins 124 of the wheeled device can fit. These locations also include the set-up line upstream of the entry side of the device 30. Advantageously, channels 120 of this nature are also formed in the floor 2 at the exit side of this device 30, and also at the entry and exit sides of the device 20 and at the exit side of the deep-frying device 1.

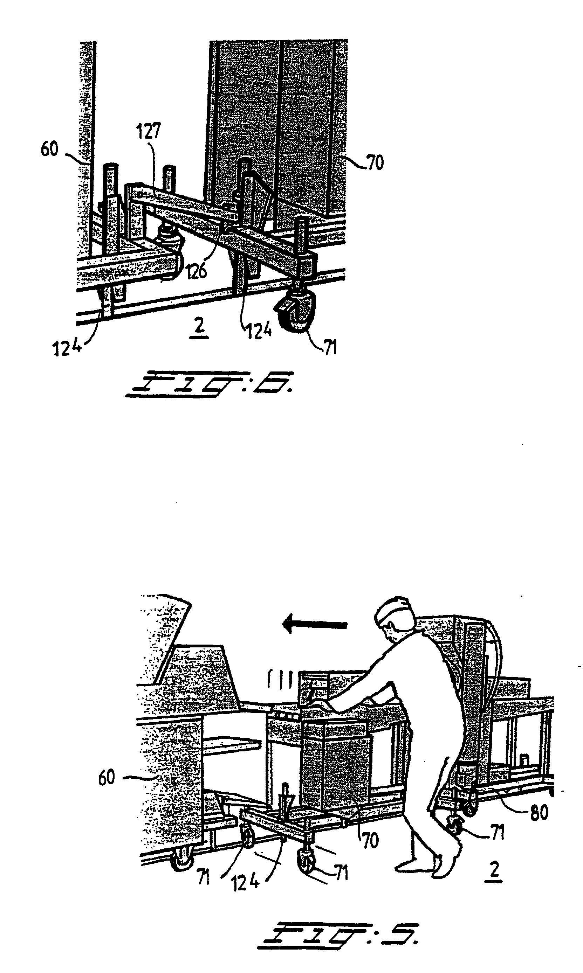

Figures 5 and 6 also show that the production devices 60, 70 on wheels are provided with actuable coupling means for releasably connecting the said wheeled production machines mechanically to one another. For this purpose, in this example each production device on wheels is provided at one end with a hook member 126 and at its other end with a movable connecting arm 127 which can be coupled to a hook member 126 of a production device arranged in line therewith.

By positioning the devices on wheels with the aid of the channel 120 and positioning means to be placed therein, and by coupling the devices mechanically together, it is possible for the desired production line to be assembled rapidly.

To control the production process using the production facility, a central main control device (not shown) is preferably provided, which is designed to control a plurality of production devices of the production facility. In a preferred embodiment of the production facility, the main control device is suitable for controlling all the production devices which form part of the production facility, i.e. both the fixed devices and the wheeled devices.

Preferably, the central main control device has memory means for storing data which are fed to the main control device during the execution of a specific production process by each of the production devices involved in the production process in question. This data preferably includes, inter alia, data from which it is possible to derive important production technology aspects and which are supplied, for example, in the form of a report with a batch of produced foodstuffs.

Preferably, automatic recognition of the arrangement of the production devices by the main control device is provided for. Preferably, it is also provided for the main control device to comprise memory means in which a plurality of production processes are stored, as well as the associated control parameters for the production devices. In one possible embodiment, the said memory also stores the required arrangement of the production devices, and of the conveyors and intermediate conveyors, for each process, and this data can be made available to the production staff on a screen and/or printout. In a variant, the main control device compares the actual arrangement, which has optionally undergone automatic recognition, of the production devices with the arrangement stored in the memory for the intended production process, and any deviation is signalled.

To enable the abovementioned rapid change from one production line to another to take place, it is preferable for at least the wheeled production devices to be provided with an identically designed interface with the main control device. This may, for example, be achieved by providing all the devices on wheels with the same multipole plug connection and producing the coupling to the main control device using multicore cables. The control means may also comprise a bus system, in which all the production devices are connected to the same bus line and each have a unique bus address. In this case, the communication may take place in two directions, from and to the main control device, but also between the various production devices.

It will be clear that the thermal treatment device(s) of the production facility described above could also be cooling devices instead of heating devices.

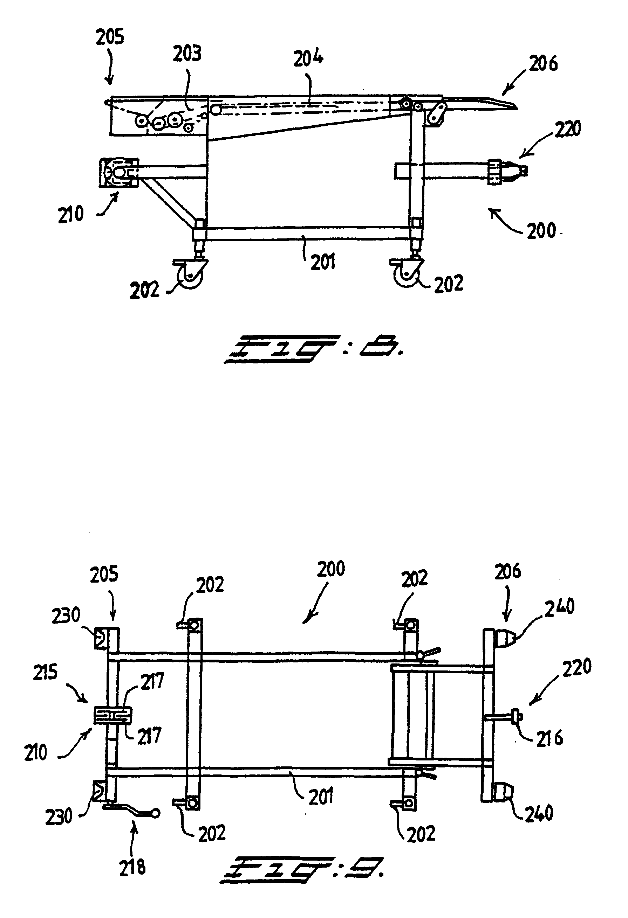

Figure 8 shows the bottom section of a production machine 200 on wheels for processing foodstuffs, having a frame 201 which is provided with wheels 202. Of the active part of the machine 200, only the conveyors 203 and 204 which displace the foodstuffs from an entry side 205 to an exit side 206 are shown. Means which are not shown subject the foodstuffs to a treatment, for example apply a coating, over the course of that path.

Figure 9 shows a plan view of the same device 200, with the conveyors 203, 204 also omitted for the sake of clarity.

The coupling means 200 comprise first coupling means 210 on the entry side 205 of the machine 200 and second coupling means 220 on the exit side 206 of the machine 200.

The first coupling means 210 may be brought into engagement with second coupling means - corresponding to the second coupling means 220 - which are arranged on a production machine which is to be arranged in line upstream of the machine 200. It is also possible for the second coupling means 220 of the machine 200 to be coupled to first coupling means - corresponding to the first coupling means 210 - of a production machine which is to be arranged in line downstream of the machine 200. This machine which is to be arranged upstream or downstream of the machine 200 may also be on wheels, but may also be arranged in a fixed position, such as the above-described deep-frying device 1 and/or the thermal treatment devices 20 and 30.

The coupling means 210, 220 are designed to clamp the coupled machines against one another, so that a stable arrangement is obtained. For this purpose, the frame 200 is provided, on the entry side 205, with a movable clamping member 215 which is able to interact with a fixed clamping member 216 in order to pull the machines together. In this example, the fixed clamping member 216 is a transversely positioned pin which, via a connecting web, is connected centrally to the frame, and the movable clamping member 216 comprises two rotatable discs 217 which are positioned next to and at a distance from one another and are each provided with a slot for receiving the transverse pin. The discs 217 are coupled to a rotary drive, in this case handle 218, so that the pin 216 can be moved into the slots in the discs 217 and can be pulled towards the machine 200 as a result of the discs 217 then being rotated.

The machine 200 and the machines which can be coupled thereto are also provided with buffer means 230 on the entry side and buffer means 240 on the exit side, which come into contact with one another when the clamping means are clamped together. In this case, it is advantageous if the buffer means 230, 240 are slightly elastically compressible under the influence of the clamping means. Furthermore, the buffer means 230 and 240 are in this case of complementary design, so that the buffer means 230 and 240 fit together and the coupled machines are positioned in the lateral direction with respect to one another.

## Claims

1. Production facility for the production of foodstuffs, comprising a plurality of production machines, including at least one fixedly arranged deep-frying device (1), which is designed to deep-fry foodstuffs, **characterized in that** the production facility also comprises a plurality of fixedly arranged thermal treatment devices (20,30) for subjecting the foodstuffs to a thermal treatment, and one or more production machines (60,70,80) which are on wheels, and **in that** the thermal treatment devices are arranged next to one another, in which each thermal treatment device has an entry side and an exit side for the foodstuffs which are to be treated, and an associated conveyor for conveying the foodstuffs in a fixed conveying direction from the entry side to the exit side, and in which the thermal treatment devices which are positioned next to one another are arranged in opposite directions, so that in each case an entry side of one thermal treatment device and an exit side of the other thermal treatment device are located on the same side of the production facility.

2. Production facility according to claim 1, in which two thermal treatment devices are arranged next to one another, and in which a conveyor (40,91,92,93) which can be displaced, preferably on wheels, is provided for the purpose of connecting the exit side of one thermal treatment device to the entry side of the other thermal treatment device or the deep-frying device.

3. Production facility according to claim 2, in which the conveyor for connecting the exit side of one thermal treatment device with the entry side of the other thermal treatment device or the deep-frying device has a substantially straight middle section (41,92), which is placed between two bend sections, which middle section and bend section comprise releasable coupling means for connecting the said sections to one another.

4. Production facility according to claim 1 or 2, in which the deep-frying device and the at least one thermal treatment device are arranged next to one another.

5. Production facility according to one or more of the preceding claims, in which the conveyor on wheels preferably have a hood for shielding the foodstuffs to be conveyed from the outside atmosphere.

6. Production facility according to one or more of the preceding claims, in which the deep-frying device comprises an elongate deep-frying bath with an associated conveyor for guiding the foodstuffs which are to be deep-fried from an entry side through the deep-frying bath to an exit side.

7. Production facility according to one or more of the preceding claims, in which the production facility furthermore comprises a bypass conveyor which extends past the deep-frying device for guiding foodstuffs which do not have to be deep-fried around the deep-frying device.

8. Production facility according to claim 7, in which the bypass conveyor extends substantially over or underneath the deep-frying bath of the deep-frying device.

9. Production facility according to one or more of the preceding claims, in which there is a moulding device on wheels for moulding three-dimensional foodstuffs from a mass.

10. Production facility according to one or more of the preceding claims, in which there is an additive-adding device on wheels for adding an additive to the foodstuffs.

11. Production facility according to one or more of the preceding claims, in which there is a main control device which is designed to control a plurality of, preferably all, the production machines.

12. Production facility according to claim 11, in which a plurality of, preferably all, the production machines are provided with an identically designed interface with the main control device.

13. Production facility according to one or more of the preceding claims, in which the production machines on wheels are each provided with actuable first positioning means which can be brought into engagement with fixed second positioning means, which are preferably arranged on the floor, for holding the wheeled production machines at a desired position.

14. Production facility according to one or more of the preceding claims, in which the production machines on wheels are each provided with actuable coupling means for releasably connecting the wheeled production machines to one another.

## Patentansprüche

1. Produktionseinheit zum Bereiten von Nahrungsmitteln mit einer Vielzahl von Produktionsmaschinen einschliesslich mindestens einer feststehend angeordneten Frittiereinrichtung (1), welche für das Frittieren von Nahrungsmitteln ausgebildet ist, **dadurch gekennzeichnet, dass** die Produktionseinheit ferner eine Vielzahl von fest angeordneter Wärmebehandlungseinheiten (20, 30) aufweist, um die Nahrungsmittel einer Wärmebehandlung zu unterziehen und ferner eine oder mehrere Produktionsmaschinen (60, 70, 80), welche auf Rädern angeordnet sind, und dass die Wärmebehandlungseinheiten nebeneinander angeordnet sind, wobei jede der Wärmebehandlungseinheiten eine Eingangsseite und eine Ausgangsseite für die zu behandelnden Nahrungsmittel aufweist sowie einen dazugehörigen Förderer zum Fördern der Nahrungsmittel in einer festgelegten Förderrichtung von der Einlassseite zur Auslassseite, wobei die Wärmebehandlungseinrichtungen, welche nebeneinander angeordnet sind, in entgegengesetzten Richtungen zueinander angeordnet sind, so dass in jedem Falle eine Eingangsseite einer Wärmebehandlungseinrichtung und eine Ausgangsseite der nächsten Wärmebehandlungseinrichtung auf der gleichen Seite der Produktionseinheit angeordnet ist.

2. Produktionseinheit nach Anspruch 1, **dadurch gekennzeichnet, dass** zwei Wärmebehandlungseinrichtungen nebeneinander vorgesehen sind, und dass ein Förderer (40, 91, 92, 93), welcher vorzugsweise auf Rädern verschiebbar ist, vorgesehen ist, um die Ausgangsseite einer Wärmebehandlungseinrichtung mit der Eingangsseite der anderen Wärmebehandlungseinrichtung oder der Frittiereinrichtung zu verbinden.

3. Produktionseinheit nach Anspruch 2, **dadurch gekennzeichnet, dass** der Förderer zum Verbinden der Ausgangsseite einer Wärmebehandlungseinrichtung mit der Eingangsseite der anderen Wärmebehandlungseinrichtung oder der Frittiereinrichtung einen im wesentlichen geraden Mittelabschnitt (41, 92) aufweist, welcher zwischen zwei kurvenförmigen Abschnitten angeordnet ist, wobei der Mittelabschnitt und die kurvenförmigen Abschnitte lösbare Kupplungseinrichtungen aufweisen, um die Abschnitte miteinander zu verbinden.

4. Produktionseinheit nach Anspruch 1 oder 2, **dadurch gekennzeichnet, dass** die Frittiereinrichtung und die mindestens eine Wärmebehandlungseinrichtung nebeneinander angeordnet sind.

5. Produktionseinheit nach einem oder mehreren der vorstehenden Ansprüche, **dadurch gekennzeichnet, dass** die auf Rädern befindlichen Förderer bevorzugt eine Haube aufweisen, um die geförderten Nahrungsmittel gegenüber der äusseren Atmosphäre abzuschirmen.

6. Produktionseinheit nach einem oder mehreren der vorstehenden Ansprüche, **dadurch gekennzeichnet, dass** die Frittiereinrichtung ein langgestrecktes Frittierbad mit einem dazugehörigen Förderer aufweist, um die Nahrungsmittel, welche frittiert werden sollen, von einer Eingangsseite durch das Frittierbad zu einer Ausgangsseite zu führen.

7. Produktionseinheit nach einem oder mehreren der vorstehenden Ansprüche, **dadurch gekennzeichnet, dass** die Produktionseinheit ferner einen Umgehungsförderer aufweist, welcher sich an der Frittiervorrichtung vorbei erstreckt, um Nahrungsmittel, welche nicht frittiert werden sollen, um die Frittiereinrichtung herum zu leiten.

8. Produktionseinheit nach Anspruch 7, **dadurch gekennzeichnet, dass** der Umgehungsförderer sich im wesentlichen über oder unter das Frittierbad der Frittiereinrichtung erstreckt.

9. Produktionseinheit nach einem oder mehreren der vorstehenden Ansprüche, **dadurch gekennzeichnet, dass** eine Formeinrichtung auf Rädern vorgesehen ist, um dreidimensionale Nahrungsmittel aus einer Masse zu formen.

10. Produktionseinheit nach einem oder mehreren der vorstehenden Ansprüche, **dadurch gekennzeichnet, dass** eine Zuschlagszuführungseinrichtung auf Rädern vorgesehen ist, um ein Zuschlagsmittel dem Nahrungsmittel beizugeben.

11. Produktionseinheit nach einem oder mehreren der vorstehenden Ansprüche, **dadurch gekennzeichnet, dass** eine Hauptsteuereinrichtung vorgesehen ist, welche zum Stuern einer Vielzahl von, bevorzugt alle, Produktionsmaschinen ausgebildet ist.

12. Produktionseinheit nach Anspruch 11, **dadurch gekennzeichnet, dass** eine Vielzahl von, bevorzugt alle, Produktionsmaschinen mit einer identisch ausgebildeten Schnittstelle zur Hauptsteuereinrichtung versehen sind.

13. Produktionseinheit nach einem oder mehreren der vorstehenden Ansprüche, **dadurch gekennzeichnet, dass** die Produktionsmaschinen auf Rädern je mit einer betätigbaren ersten Positioniereinrichtung versehen sind, welche in Eingriff mit einer feststehenden zweiten Positioniereinrichtung bringbar ist, welche bevorzugt auf dem Boden angeordnet sind, um die Produktionsmaschinen auf Rädern in einer gewünschten Position zu halten.

14. Produktionseinheit nach einem oder mehreren der vorstehenden Ansprüche, **dadurch gekennzeichnet, dass** die Produktionsmaschinen auf Rädern je mit einer betätigbaren Kupplungseinrichtung versehen sind, um die Produktionsmaschinen auf Rädern lösbar miteinander zu verbinden.

## Revendications

1. Installation de production destinée à la production de denrées alimentaires, comprenant une pluralité de machines de production, comprenant au moins un dispositif de friture disposé de manière fixe (1) étant conçu pour faire frire des denrées alimentaires, **caractérisée en ce que** l'installation de production comprend également une pluralité de dispositifs de traitement thermique (20, 30) disposés de manière fixe pour soumettre les denrées alimentaires à un traitement thermique et une ou plusieurs machines de production (60, 70, 80) qui sont montées sur roues,
et **en ce que** les dispositifs de traitement thermique sont disposés proches l'un de l'autre, dans laquelle chaque dispositif de traitement thermique présente un côté d'entrée et un côté de sortie pour les denrées alimentaires que l'on doit traiter et un convoyeur associé pour acheminer les denrées alimentaires selon un sens de transport fixe à partir du côté d'entrée jusqu'au côté de sortie et dans laquelle les dispositifs de traitement thermique qui sont positionnés proches l'un de l'autre sont disposés dans des sens opposés, de telle façon que dans chaque cas un côté d'entrée d'un dispositif de traitement thermique et un côté de sortie de l'autre dispositif de traitement thermique sont situés du même côté de l'installation de production.

2. Installation de production selon la revendication 1, dans laquelle deux dispositifs de traitement thermique sont disposés proches l'un de l'autre et dans laquelle un convoyeur (40, 91, 92, 93) que l'on peut déplacer, de préférence monté sur roues, est prévu dans le but de raccorder le côté de sortie d'un dispositif de traitement thermique au côté d'entrée de l'autre dispositif de traitement thermique ou au dispositif de friture.

3. Installation de production selon la revendication 2, dans laquelle le convoyeur destiné à raccorder le côté de sortie d'un dispositif de traitement thermique au côté d'entrée de l'autre dispositif de traitement thermique ou au dispositif de friture comporte une section médiane sensiblement rectiligne (41, 92) qui est placée entre deux sections courbes, cette section médiane et ces sections courbes comprenant des moyens d'accouplement libérables pour raccorder lesdites sections l'une à l'autre.

4. Installation de production selon la revendication 1 ou 2, dans laquelle le dispositif de friture et le dispositif de traitement thermique au moins sont disposés proches l'un de l'autre.

5. Installation de production selon une ou plusieurs des revendications précédentes, dans laquelle le convoyeur sur roues comporte de préférence un capot pour protéger de l'atmosphère extérieure les denrées alimentaires que l'on doit transporter.

6. Installation de production selon une ou plusieurs des revendications précédentes, dans laquelle le dispositif de friture comprend un bain de friture allongé avec un convoyeur associé pour guider les denrées alimentaires que l'on doit faire frire à partir d'un côté d'entrée jusqu'à un côté de sortie à travers le bain de friture.

7. Installation de production selon une ou plusieurs des revendications précédentes, dans laquelle l'installation de production comprend de plus un convoyeur de dérivation qui s'étend au-delà du dispositif de friture pour guider les denrées alimentaires que l'on ne doit pas faire frire autour du dispositif de friture.

8. Installation de production selon la revendication 7, dans laquelle le convoyeur de dérivation s'étend sensiblement au-dessus ou au-dessous du bain de friture du dispositif de friture.

9. Installation de production selon une ou plusieurs des revendications précédentes, dans laquelle il y a un dispositif de moulage sur roues pour mouler les denrées alimentaires en trois dimensions à partir d'une masse.

10. Installation de production selon une ou plusieurs des revendications précédentes, dans laquelle il y a un dispositif d'ajout d'additif sur roues pour ajouter un additif aux denrées alimentaires.

11. Installation de production selon une ou plusieurs des revendications précédentes, dans laquelle il y a un dispositif de commande principal qui est conçu pour commander une pluralité de machines de production, de préférence toutes.

12. Installation de production selon la revendication 11, dans laquelle une pluralité de machines de production, de préférence toutes, sont munies d'une interface de conception identique avec le dispositif de commande principal.

13. Installation de production selon une ou plusieurs des revendications précédentes, dans laquelle les machines de production sur roues sont toutes munies de premiers moyens de positionnement pouvant être actionnés que l'on peut mettre en prise avec des deuxièmes moyens de positionnement fixes, qui sont de préférence disposés sur le plancher, pour maintenir les machines de production dans une position désirée.

14. Installation de production selon une ou plusieurs des revendications précédentes, dans laquelle les machines de production sur roues sont toutes munies de moyens d'accouplement actionnables pour raccorder de manière libérable les machines de production sur roues l'une à l'autre.
